# EUROPÄISCHE PATENTSCHRIFT

(11) **EP 2 025 646 B1**
(45) Veröffentlichungstag und Bekanntmachung des Hinweises auf die Patenterteilung: **09.12.2015**
(21) Anmeldenummer: 08010838.4
(22) Anmeldetag: 13.06.2008
(51) Int. Cl.: C02F 1/68, C02F 3/12, C02F 1/66

(54) **Vorrichtung zum Dispergieren eines Feststoffs in Abwasser**
Device for dispersing a solid in waste water
Dispositif de dispersion d'une matière solide dans des eaux usées

(30) Priorität: 27.07.2007 DE 102007035253
(43) Veröffentlichungstag der Anmeldung: 18.02.2009
(73) Patentinhaber: Hausberger, Anton, 84428 Buchbach (DE)
(72) Erfinder: Hausberger, Anton, 84428 Buchbach (DE)
(74) Vertreter: Schön, Christoph

(56) Entgegenhaltungen:
- EP-A1- 0 380 299
- EP-A1- 1 413 556
- EP-A2- 1 741 679
- WO-A1-96/33952
- WO-A1-2006/033522
- CH-A- 170 458
- DE-C1- 4 420 685
- GB-A- 684 607
- JP-A- H07 290 067
- US-A1- 2004 004 038

## Beschreibung

Die vorliegende Erfindung betrifft eine Vorrichtung zum Dispergieren, insbesondere zum Lösen und/oder Suspendieren, eines Feststoffs in durch die Vorrichtung leitbarem Abwasser sowie ihre Verwendung in einer Abwasserreinigungs- oder Kläranlage, insbesondere zur Erhöhung des pH-Werts des Abwassers oder Verringerung des Calcitlösevermögens des Abwassers. Außerdem kann mit ihr auf zuverlässige und einfache Weise eine Erhöhung der Versorgung einer nach dem aeroben Belebtschlammverfahren betriebenen biologischen Abwasserreinigungs-oder Kläranlage mit Calcium und Magnesium erreicht werden oder ein lösender Angriff von Beton in einer Abwasserreinigungs- oder Kläranlage verringert und zumindest teilweise oder sogar vollständig vermieden werden.

### Hintergrund und Stand der Technik

Aus der EP 1 741 679 A2 ist ein Verfahren bekannt zur verbesserten Versorgung von Abwasser mit Calcium und Magnesium. Dabei wird Belebtschlamm enthaltendes Abwasser aus der Biologie einer Abwasserreinigungsanlage oder Kläranlage in einen Reaktor, der einen anorganischen Feststoff, der in dem Abwasser dispergiert werden soll, eingedüst. Beim Betrieb eines solchen Reaktors hat sich gezeigt, dass ein kontinuierliches Dispergieren, insbesondere Lösen und/oder Suspendieren, des Feststoffs ohne Störungen nicht möglich ist. Der in den Reaktor gefüllte Feststoff wird nicht gleichmäßig dispergiert, sondern bevorzugt im Bereich der Eindüsung gelöst und/oder dispergiert. Im Bereich der Eindüsung wird daher der eingefüllte Feststoff schnell verbraucht. Der in den Reaktor gefüllte Feststoff formt sich dort trichterförmig. Ohne ständige Kontrollen durch Betriebspersonal und ein Auffüllen des Trichters mit neuem Feststoff oder Umverteilen des Feststoffs durch das Betriebspersonal ist ein störungsfreier Betrieb nicht möglich. Es kann daher leicht zu Verschlechterungen in der Reinigungs- oder Klärleistung solcher Abwasserreinigungs- oder Kläranlagen kommen. Durch den erhöhten Aufwand an manueller Nachfüll- oder Umverteilungsarbeit steigen die Kosten des Betriebs der gesamten Kläranlage. Ferner ist die gleichmäßige Versorgung des Abwassers mit Calcium und Magnesium nicht möglich. Dadurch kann eine vorteilhafte Erhöhung des pH-Werts des Abwassers, eine vorteilhafte Verringerung des Calcitlösevermögens des Abwassers, eine vorteilhafte Erhöhung der Versorgung einer nach dem aeroben Belebtschlammverfahren betriebenen biologischen Abwasserreinigungsanlage mit Calcium und Magnesium, eine positive Erhöhung des Gehalts an CaCO3 der Belebtschlammflocke einer nach dem aeroben Belebtschlammverfahren betriebenen biologischen Abwasserreinigungsanlage sowie die Verringerung oder Vermeidung eines lösenden Angriffs von Beton in der Abwasserreinigungs- oder Kläranlage nicht sichergestellt werden.

Der Versuch dieses Problem dadurch zu lösen, das Abwasser an mehreren Stellen in den Reaktor einzudüsen, erfordert, dass je weiterer Eindüsung eine zusätzliche Pumpe benötigt wird. Diese Ausgestaltung ist nicht nur konstruktiv deutlich aufwändiger und wegen der mehrfachen Eindüsung komplizierter zu steuern, sondern auch deutlich kostenintensiver, da mehrere Pumpen benötigt werden.

Ein anderer Versuch dieses Problem zu lösen, indem man das in den Reaktor eingeleitete Abwasser gegen eine halbkugelförmige Prallfläche strömen lässt, um das Abwasser gleichmäßig im Reaktor und in dem eingefüllten Feststoff zu verteilen führte ebenfalls zu den oben bereits beschriebenen "Trichtern" in dem Feststoff und zu einer ungleichmäßigen Dispersion des Feststoffs, so dass auch hier nicht auf ständige Kontrollen und häufiges manuelles Nachfüllen oder Umverteilen des Feststoffs durch das Betriebspersonal verzichtet werden konnte.

Die US 2004/0004038 A1 offenbart eine Vorrichtung und ein Verfahren zur Behandlung von Abwasser.

### Aufgabe

Die Aufgabe der vorliegenden Erfindung ist es daher, die Nachteile aus dem Stand der Technik zu vermeiden oder zu beseitigen und insbesondere eine Vorrichtung bereitzustellen mit der auf zuverlässige, einfache und kostengünstige Weise ein Feststoff gleichmäßig und kontinuierlich in Abwasser dispergiert, vorzugsweise gelöst, werden kann, um eine Abwasserreinigungs- oder Kläranlage weniger arbeits- und kostenaufwändig sowie mit verbesserter Reinigungs- oder Klärleistung betreiben zu können. Insbesondere soll eine Erhöhung des pH-Werts des Abwassers, eine vorteilhafte Verringerung des Calcitlösevermögens des Abwassers, eine vorteilhafte Erhöhung der Versorgung einer nach dem aeroben Belebtschlammverfahren betriebenen biologischen Abwasserreinigungsanlage mit Calcium und Magnesium sowie eine positive Erhöhung des Gehalts an CaCO3 der Belebtschlammflocke einer nach dem aeroben Belebtschlammverfahren betriebenen biologischen Abwasserreinigungsanlage erreicht werden können.

### Erfindung

Diese Aufgabe wird durch die Vorrichtung nach Anspruch 1 sowie die Verwendung nach Anspruch 10 gelöst. Bevorzugte vorteilhafte Ausführungsformen finden sich in den jeweiligen Unteransprüchen.

Die erfindungsgemäße Vorrichtung zum Dispergieren, insbesondere Lösen und/oder Suspendieren, eines Feststoffs in durch die Vorrichtung leitbarem Abwasser umfasst:
(a) einen Behälter (12) zur Aufnahme des Feststoffs, wobei die Schütthöhe des Feststoffs in dem Behälter 20 bis 400 cm beträgt, wobei die Vorrichtung so angeordnet ist, dass das Abwasser entgegen der Schwerkraft durch den Behälter pumpbar ist, und der Behälter nach oben hin offen ist und einen zylinderförmigen Körper aufweist,
(b) einen Zulauf (14), durch den das Abwasser von unten in die Mitte des Behälters und zu dem Feststoff einleitbar ist,
(c) einen Ablauf (16), durch den der in dem Abwasser gelöste und/oder suspendierte Feststoff aus dem Behälter ableitbar ist,
(d) eine Rühreinrichtung (18) zum Mischen von in dem Behälter aufgenommenem Feststoff und durch den Zulauf in den Behälter eingeleitetem Abwasser,
(e) eine Pumpe zum Pumpen des Abwassers durch den Zulauf in den Behälter und des in dem Abwasser gelösten und/oder suspendierten Feststoffs durch den Ablauf aus dem Behälter und
(f) einen Verteilerkegel (24), der über dem Zulauf (14) angeordnet ist, zur Verteilung des über den Zulauf in den Behälter zugeführten Abwassers in dem Behälter.

Mit dieser Vorrichtung kann ein gleichmäßiges und kontinuierliches Dispergieren, vorzugsweise ein Lösen, des Feststoffs in dem Abwasser erreicht werden. Diese Vorrichtung kann vorteilhaft in einer Abwasserreinigungs- oder Kläranlage verwendet werden, insbesondere um Magnesium und Calcium in dem Abwasser zu lösen. Damit kann eine vorteilhafte Erhöhung des pH-Werts des Abwassers, eine vorteilhafte Verringerung des Calcitlösevermögens des Abwassers, eine vorteilhafte Erhöhung der Versorgung einer nach dem aeroben Belebtschlammverfahren betriebenen biologischen Abwasserreinigungsanlage mit Calcium und Magnesium sowie eine positive Erhöhung des Gehalts an CaCO3 der Belebtschlammflocke einer nach dem aeroben Belebtschlammverfahren betriebenen biologischen Abwasserreinigungs- oder Kläranlage erreicht werden.

Die Vorrichtung der Erfindung umfasst zusätzlich eine Pumpe zum Pumpen des Abwassers durch den Zulauf in den Behälter und des in dem Abwasser gelösten und/oder suspendierten Feststoffs durch den Ablauf aus dem Behälter. Ferner ist die Vorrichtung so angeordnet, dass das Abwasser entgegen der Schwerkraft durch den Behälter pumpbar ist, wobei die Vorrichtung so angeordnet ist, dass der Behälter nach oben hin offen ist. Durch diese Öffnung kann auf einfache Weise der Feststoff in den Behälter gefüllt werden und mit Hilfe der Schwerkraft im Wesentlichen gleichmäßig in dem Behälter verteilt werden, bevorzugt auch während eines kontinuierlichen Betriebs der Vorrichtung.

Der Zulauf der Vorrichtung kann eine Rückschlagklappe aufweisen. Dies ist vorteilhaft, wenn eine Betriebsstörung eintritt, da so vermieden werden kann, dass noch nicht gelöster oder noch nicht suspendierter Feststoff in die Pumpe gelangt, die bevorzugt vorgesehen ist.

Die Rühreinrichtung kann mindestens ein Rührblatt aufweisen. Anstellte eines Rührblattes können jedoch beliebige andere Rührwerkzeuge eingesetzt werden, z. B. eine Rührschnecke. Besonders bevorzugt weist die erfindungsgemäße Vorrichtung zwei Rührblätter auf. Mit zwei Rührblättern wird ein operativer Nutzen erzielt zwischen apparativem Aufwand und Leistung hinsichtlich der gleichmäßigen und kontinuierlichen Dispersion des Feststoffs in dem Abwasser.

Die erfindungsgemäße Vorrichtung weist als Behälter einen zylinderförmigen Körper auf. Damit kann am besten ein gleichmäßiges und kontinuierliches Lösen und/oder Suspendieren mit einer Rühreinrichtung erzielt werden, die ein rotierendes Rührwerk, vorzugsweise mindestens ein Rührblatt, einsetzt.

Die erfindungsgemäße Vorrichtung kann einen Behälter umfassen, der eine Höhe von bis zu 4 m, vorzugsweise etwa 2,0 bis 2,5 m, besonders bevorzugt etwa 2,2 m, und einen Durchmesser von bis zu 3 m, vorzugsweise 1,0 bis 1,5 m, besonders bevorzugt etwa 1,2 m, aufweist. Mit diesen Dimensionen kann die Vorrichtung in Abwasserreinigungs- oder Kläranlagen für bis zu 60.000 Einwohnereinheiten genutzt werden. Entsprechend der geplanten Nutzung können die Dimensionen der erfindungsgemäßen Vorrichtung angepasst werden. Für bis zu 20.000 Einwohnereinheiten einer Abwasserreinigungs- oder Kläranlage beträgt die Höhe des Behälters vorzugsweise 2,0 bis 2,5 m, und der Durchmesser des Behälters beträgt vorzugsweise von 1,0 bis 1,5 m. Bei dieser Größenordnung ist ein Rührblatt in der Regel ausreichend und bevorzugt.

Erfindungsgemäß ist der Zulauf so ausgebildet, dass das Abwasser in die Mitte des Behälters einleitbar ist. Damit kann für eine gleichmäßige und kontinuierliche Dispersion des Feststoffs im Abwasser auf mehrere Pumpen verzichtet werden, da eine Pumpe allein dann ausreichend ist.

Erfindungsgemäß umfasst die erfindungsgemäße Vorrichtung zusätzlich einen Verteilerkegel zur Verteilung des über den Zulauf in den Behälter zugeführten Abwassers in dem Behälter.

Die erfindungsgemäße Vorrichtung kann aus gewöhnlichem Stahl gefertigt werden, wenn eine ausreichende Stärke, gegebenenfalls eine Verschleißschicht vorgesehen wird, vorzugsweise ist sie jedoch aus nichtrostendem Stahl gefertigt. Die Wandstärke des Behälters der erfindungsgemäßen Vorrichtung kann bis zu 6 mm, vorzugsweise etwa 3 mm, betragen.

Die Rühreinrichtung der erfindungsgemäßen Vorrichtung kann eine Welle mit einem Durchmesser von bis zu 80 mm, vorzugsweise etwa 40 mm, aufweisen.

Bei einer bevorzugten Ausführungsform enthält das Abwasser Belebtschlamm, vorzugsweise in einem Trockenmassegehalt von 0,01 % bis 15 %, besonders bevorzugt in einem Trockenmassegehalt von 0,1 % bis 2 %.

Der nach völliger Austrocknung von Schlämmen übrig bleibende Rest wird Trockenmasse genannt. Der Trockenmassegehalt (TS), auch Trockensubstanzgehalt genannt, ergänzt sich mit dem Wassergehalt (W) zu 100%: TS + W = 100%.

Bei einer bevorzugten Ausführungsform der Erfindung enthält das Abwasser eine Säure, besonders bevorzugt Kohlensäure. Denn die Vorrichtung der Erfindung kann dann auch verwendet werden zur Verringerung oder Vermeidung von Verschleiß von Beton durch einen lösenden Angriff. Insbesondere kann Beton einer ein Betonbecken umfassenden Abwasserreinigungsanlage oder Kläranlage geschützt werden, vor allem von mit Abwasser in Kontakt kommenden Wänden des Betonbeckens.

Ein lösender Angriff von Beton kann durch Säuren, insbesondere in Abwasser verdünnte, anorganische und organische Säuren, Fett und Öle sowie durch austauschfähige Salze erfolgen.

Der Angriff durch Säuren ist abhängig von der Konzentration der gelösten Säure und ihrer Stärke.

Starke Säuren, wie Mineralsäuren, z. B. Salzsäure, Salpetersäure und Schwefelsäure, liegen in Wasser vollständig dissoziiert vor. Der pH-Wert einer starken Säure ergibt sich aus der Konzentration der Säure und lässt sich aus der Konzentration der Protonen berechnen. Starke Säuren können alle Bestandteile eines Zementsteins unter Bildung von Calcium-, Aluminium- und Eisensalzen sowie Kieselgel auflösen. Starke Säuren sind gemäß dieser Beschreibung solche Säuren, die einen pKs-Wert, der auch protochemisches Normalpotential eines Brönstedschen Säure-Base-Systems genannt wird, von < 0, vorzugsweise im Bereich von -7,0 bis
- 1,00, aufweisen. Die Säure HCl weist z.B. für das Säure-Base-System HCl ⇆ H⁺ + Cl⁻ einen pKs-Wert von -7,0 auf. Die Schwefelsäure weist für das Säure-Base-System H₂SO₄ ⇆ H⁺ + HSO₄⁻-einen pKs-Wert von -3,0 auf. Die Salpetersäure weist für das Säure-Base-System HNO₃ ⇆ H⁺ + NO₃⁻einen pKs-Wert von
- 1,37 auf.

Schwache Säuren liegen in Wasser nicht vollständig dissoziiert vor. Bei der Berechnung des pH-Wertes einer schwachen Säure muss deshalb ihr pKs-Wert berücksichtigt werden. Schwache Säuren sind gemäß dieser Beschreibung solche Säuren, die einen pKs-Wert im Bereich von 1,90 bis 9,5 aufweisen, vorzugsweise im Bereich von 3,5 bis 7, besonders bevorzugt im Bereich von 4,75 bis 6,5. Kohlensäure ist beispielsweise eine schwache Säure, die sich nur zu 0,1 % in Wasser löst. Ihr pKs-Wert weist für das Säure-Base-System CO₂ + H₂O ⇆ H⁺ + HCO₃⁻ einen pKs-Wert von 6,35 auf. Weitere schwache Säuren sind beispielsweise Essigsäure mit einem pKs-Wert von 4,75 für das Säure-Base-System CH₃CO₂H ⇆ H⁺ + CH₃CO₂⁻sowie Milchsäure mit einem pKs-Wert von 3,73.

Eine schwache Säure reagiert mit Ca(OH)₂, basischen Hydratphasen und mit Carbonaten, zum Beispiel mit Kalkstein (CaCO₃), unter Bildung von wasserlöslichem Calciumhydrogencarbonat. Sie kann mit der Tonerde und dem Eisenoxid des Zementes keine löslichen Salze (Hydrogencarbonate) bilden. Beim Einwirken von Kohlensäure, insbesondere Kalk lösender Kohlensäure, auf Zementstein bleiben daher Aluminium- und Eisenhydroxid bzw. Eisen- oder Aluminiumoxidhydrat zurück.

Die Abgase zahlreicher Brennstoffe, z. B. Kohle und Heizöl, enthalten Schwefeldioxid (SO₂), das mit Wasser schweflige Säure bildet. Obwohl die Konzentration von Schwefeldioxid in der Luft wesentlich geringer ist als diejenige von Kohlendioxid bezogen auf die Einwirkungsdauer von Kohlendioxid (Kohlensäure), wird wegen der größeren Säurestärke der schwefligen Säure Beton angegriffen, allerdings zeigen sich Schäden (Abmehlen der Betonaußenschicht) erst nach längerer Einwirkungsdauer. Moorböden können Eisensulfide (z. B. Pyrit) enthalten, die nach Oxidation des Schwefels in Gegenwart von Wasser schweflige Säure bilden. Da letztere dann in wesentlich größerer Konzentration als in der Luft vorliegt, werden Betonbauteile dadurch auch wesentlich rascher angegriffen. Darüber hinaus können durch Weiteroxidation des Sulfits mit Luftsauerstoff auch Sulfate gebildet werden, die bei Betonbauwerken zu einem treibenden Angriff führen.

Schwefelwasserstoff (H₂S) ist ebenfalls eine schwache Säure, die Beton im Gasraum von Abwasserreinigungsanlagen oberhalb des Wasserspiegels angreifen kann. Der pKs-Wert beträgt 6,99 für das Säure-Base-System H₂S ⇆ H⁺ + HS⁻. Voraussetzung für eine biogene Schwefelsäurekorrosion (BSK) ist jedoch das Vorhandensein von organischen und anorganischen Schwefelverbindungen im Abwasser bzw. in der sogenannten Sielhaut von Abwasserleitungen. Schwefelwasserstoff wird z. B. aus Sulfaten in Gegenwart von sulfatreduzierenden Bakterien gebildet, wenn das Abwasser durch Sauerstoffmangel vom aeroben in den anaeroben Zustand übergeht. Dieser Prozess wird durch höhere Temperaturen und durch fallenden pH-Wert des Abwassers beschleunigt. Derartige Bedingungen treten besonders bei Abwasseranlagen in heißen Ländern auf, haben aber auch in Ländern, wie Deutschland, Schweiz und Österreich, zu erheblichen Schäden in Abwassersystemen, wie Abwasserrohrsystemen oder in Abwasserreinigungsanlagen, geführt. Der Schwefelwasserstoff entweicht, verstärkt im Bereich turbulenter Strömung, in den Gasraum über dem Abwasserspiegel, und kann auf feuchten Betonoberflächen in Anwesenheit von Luftsauerstoff und unter der Wirkung von aeroben Mikroorganismen, z.B. Thiobakterien, wie Thiobazillus concretivorus, Schwefelsäure bilden. Dabei sind neben den angebotenen Schwefelwasserstoffmengen vor allem die Temperaturen in dem Abwasser maßgebend, da die mikrobiologisch gesteuerten Oxidationsvorgänge des Schwefelwasserstoffes zur Schwefelsäure am schnellsten bei Temperaturen von etwa 30 °C ablaufen. Es kann aber schon oberhalb von 18 °C aus Schwefelwasserstoff in Gegenwart von Sauerstoff und Feuchtigkeit eine sehr stark angreifende 6-prozentige Schwefelsäure mit einem pH-Wert von 0,1 gebildet werden. Durch die Schwefelsäure wird der basische Zementstein des Betons und gegebenenfalls carbonatischer Zuschlag einem lösenden Angriff unterzogen. Durch Gips- und Ettringitausscheidungen im Betongefüge kommt es gleichzeitig zu einem treibenden Angriff. Bisher wurde als vorbeugende Maßnahmen gegen Schwefelwasserstoffentwicklung in Abwassersystemen vorgeschlagen in den Abwassersystemen ein gleichmäßiges und ausreichendes Gefälle der Rohrleitungen, keine Turbulenzen, keine Totbereiche zur Vermeidung von Schlammbildung und eine gute Belüftung vorzusehen.

Der lösende Angriff von Fetten und Ölen, z.B. pflanzlichen Fetten und Ölen, die Glycerinester mehrfach ungesättigter Fettsäuren darstellen, auf Beton kann dadurch erfolgen, dass sie durch das Calciumhydroxid des Zementsteins verseift werden, indem die Ester durch Wasseraufnahme gespalten werden. Die fettsauren Calciumsalze sind wasserlöslich und führen zur Schwächung des Betongefüges. Insbesondere bei höheren Temperaturen werden Betone durch pflanzliche Fette und Öle stark angegriffen.

Zu den austauschfähigen Salzen, die Beton lösend angreifen können, gehören vor allem Magnesium- und Ammoniumsalze, wie Magnesiumchlorid und Ammoniumchlorid. Sie greifen den Beton an, indem sie einerseits mit dem Kalkhydrat des Zementsteins leicht lösliche Chloride bilden. Beim Einwirken von Ammoniumchlorid auf basischen Zementstein kann Ammoniak in gasförmiger Form entweichen. Dadurch kann eine Neutralisation des Calciumhydroxids erfolgen, wobei zusätzlich leicht lösliches Calciumchlorid gebildet wird. Chloridquellen sind Meerwasser, Salzlagerstätten, Tausalzlösungen und Chlorwasserstoff. Chlorwasserstoff wird beispielsweise bei einer durch Brand verursachten Zersetzung von Polyvinylchlorid (PVC) in Rohrleitungen, Kabelummantelungen, Fensterrahmen und Behältern aus PVC freigesetzt und mit Löschwasser in Salzsäure umgewandelt. Bei Berührung mit Beton reagieren die Salzsäuredämpfe mit dem Zementstein unter Bildung von Calciumchlorid, welches sich zunächst in der Betonaußenzone anreichert.

Eine der bedeutendsten Ursachen eines lösenden Angriffs von Beton ist jedoch der Angriff durch Kohlensäure, insbesondere freier Kalk lösender Kohlensäure. Bisher von der Österreichischen Vereinigung für Beton- und Bautechnik vorgeschlagene Maßnahmen gegen den Angriff von Kohlensäure, insbesondere Kalk lösender Kohlensäure, auf Beton betreffen Maßnahmen, die hauptsächlich den Beton selbst betreffen. So wurde vorgeschlagen eine Einplanung einer erhöhten Betondeckung bei Neuanlagen als Verschleißschicht vorzusehen, bei der Herstellung von Beton Bindemittel mit einem geringen Ca(OH)₂-Gehalt im erhärteten Zementstein einzusetzen und kein Kalksteinmehl als Zusatzstoff zu verwenden. Siehe dazu "Neue Lösungen für Kläranlagenbeton" in bau.zeitung 6/07, Seiten 33 bis 36. Diese Maßnahmen, die den Beton selbst betreffen haben den Nachteil, dass sie nur für den Bau von neuen Abwasserreinigungsanlagen oder Kläranlagen eingesetzt werden können oder bei einer grundlegenden Sanierung solcher Anlagen. Bei Anlagen, die bereits im Betrieb sind und ohne Sanierung weiter betrieben werden müssen, können diese Maßnahmen nicht angewendet werden.

Ferner wurde eine Schutzschicht aus Kunststoff oder auf Silikatbasis vorgeschlagen, z. B. durch eine Nachbehandlung von Beton mit Epoxid- oder Acrylatfilmen oder eine Imprägnierung auf Silikatbasis. Eine solche Schutzschicht kann zwar den tatsächlichen Angriff verhindern, eine solche Schutzschicht ist jedoch aufwändig und kostenintensiv. Außerdem kann durch eine lokale Beschädigung der Schutzschicht dennoch eine Beschädigung auftreten, die längere Zeit unerkannt bleibt und so zu einem signifikanten Angriff des Betons führen. In dem oben bereits genannten Artikel

"Neue Lösungen für Kläranlagenbeton" in bau.zeitung 6/07, Seiten 33 bis 36, wird beschrieben, dass eine erhebliche Zahl von Abwasserreinigungsanlagen oder Kläranlagen Betonschäden aufweisen und insbesondere Dichteschäden aufweisen. Das Aufbringen einer Schutzschicht kann aber ebenfalls nur bei neuen Anlagen oder bei Altanlagen nur durch eine Unterbrechung des Betriebs des Systems durchgeführt werden. Dies ist besonders bei Abwasserreinungunsanlagen oder Kläranlagen, Kanalisationssystemen, Abwasserrohren nachteilig, da den Betreibern oft nur eine einzige Anlage zur Verfügung steht.

Der lösende Angriff kann vorzugsweise dann vermieden werden, wenn mit der erfindungsgemäßen Vorrichtung ein Feststoff dispergiert, vorzugsweise gelöst, wird, der für ein anorganisches Material steht, das sowohl Calcium als auch Magnesium enthält. Dieses calcium- und magnesiumhaltige Material enthält ferner ein Carbonat, Hydrogencarbonat, Oxid oder Hydroxid oder eine Mischung von zwei oder mehreren dieser Anionen. Neben diesen erfindungsgemäßen Bestandteilen kann das anorganische Material noch andere Bestandteile aufweisen, die im Folgenden auch als Nebenbestandteile bezeichnet werden. Diese Nebenbestandteile sind z. B. die Oxide von Silicium, Aluminium, Eisen, Kalium, Titan und Phosphor, die jeweils in Mengen von 0,05 bis 0,3 Gewichtsprozent vorliegen können. Ferner können in Spurenmengen von bis zu 100 ppm Chloride, Fluoride und verschiedene Metalle als weitere Nebenbestandteile enthalten sein. Die Nebenbestandteile machen in der Regel jedoch weniger als 5 Gew.-% des anorganischen Materials aus, vorzugsweise weniger als 2 Gew.-% und besonders bevorzugt weniger als 1 Gew.-%. Das anorganische Material kann zum Beispiel eine beliebige Mischung von Calciumcarbonat und Magnesiumhydrogencarbonat enthalten oder eine beliebige Mischung von Calciumoxid und Magnesiumhydroxid, oder es kann Dolomit enthalten. Vorzugsweise enthält das anorganische Material CaCO₃, MgO, MgCO₃ und CaO, besonders bevorzugt CaCO₃, MgO und MgCO₃, ganz besonders bevorzugt thermisch behandelten Dolomit. Besonders bevorzugt findet durch Verwendung der erfindungsgemäßen Vorrichtung eine chemische Auflösung des Feststoffs in dem Abwasser statt.

Mit der erfindungsgemäßen Vorrichtung kann daher der Verschleiß von Beton durch einen lösenden Angriff verringert oder teilweise oder sogar vollständig vermieden werden.

Das anorganische Material kann mit Wasser und/oder Kohlendioxid zu Ca(OH)₂, Mg(OH)₂, Ca(HCO₃)₂, Mg(HCO₃)₂ reagieren. Sobald diese Spezies im Abwasser vorliegen, wird insbesondere das Gleichgewicht der Lösungsreaktionen des lösenden Angriff einer Säure, insbesondere der Kohlensäure, von Beton zu ungunsten der Lösungsreaktion beeinflusst und somit der lösende Angriff von Beton verringert oder sogar ganz vermieden. Damit wird vor allem Beton geschützt, der unmittelbar mit Abwasser in Kontakt kommt, aber auch Beton über einem Wasserspiegel wird geschützt, da dieser Beton durch Säuren angegriffen werden kann, die ihn über die Gasphase angreifen, z. B. wie oben in Bezug auf den Angriff durch H₂S erläutert. Der lösende Angriff von Fetten und Ölen wird durch das anorganische Material, das durch die erfindungsgemäße Vorrichtung zumindest teilweise gelöst werden kann, insbesondere dadurch verringert oder sogar ganz vermieden, dass die Calcium- und Magnesiumkomponenten mit Abwasser in ausreichendem Umfang Calcium- und Magnesiumhydroxid bilden, welche die Ester in den Fetten und Ölen spalten können ohne dass dafür Calciumhydroxid aus dem Beton herausgelöst wird.

Ferner wird insbesondere durch die Magnesiumkomponente des anorganischen Materials vor allem der Angriff durch austauschfähige Salze verringert oder sogar ganz vermieden. Gelöstes Magnesium kann sich an Beton, der im Wesentlichen basisch reagiert, als Brucit (Mg(OH)₂) abscheiden und so eine den lösenden Angriff hemmende Schicht bilden.

Damit kann besonders vorteilhaft der Beton von Abwasserreinungunsanlagen oder Kläranlagen oder anderen Systemen, die mit Abwasser in Berührung kommen, insbesondere solche durch die Abwasser geleitet wird, vor einem lösenden Angriff ohne Unterbrechung des Betriebs geschützt werden. Dies hat den Vorteil, dass ältere Anlagen baulich nicht nachgebessert werden müssen. Bei Neuanlagen kann auf die bisher vorgeschlagenen Maßnahmen, die den Beton selbst betreffen, verzichtet werden. Ferner kann auf aufwändige und teure Beschichtungen mit Kunststoffen oder Silikaten verzichtet werden. Bei Anlagen für besonders aggressive Abwässer kann die Erfindung aber auch zusammen mit den bisher vorgeschlagenen Maßnahmen, die den Beton selbst betreffen, und/oder den vorgeschlagenen Schutzschichten gemeinsam eingesetzt werden.

Die Erfindung kann besonders den Verschleiß von Beton durch den lösenden Angriff einer Säure, vorzugsweise der Kohlensäure, verringern oder sogar ganz vermeiden. Damit kann besonders vorteilhaft der Beton der Wände eines Belebungs- und/oder Nachklärbeckens in einer Abwasserreinigungsanlage mit Nitrifikation und Denitrifikation geschützt werden. Es hat sich nämlich gezeigt, dass insbesondere in Belebungs- und Nachklärbecken hohe Kohlensäurekonzentrationen auftreten können, vor allem bei Abwasserreinungunsanlagen oder Kläranlagen mit Nitrifikation und Denitrifikation.

Bei einer bevorzugten Ausführungsform wird nur ein Teilvolumenstrom von Abwasser, gegebenenfalls auch Belebtschlamm einer nach dem aeroben Belebtschlammverfahren betriebenen biologischen Abwasserreinungsanlage oder Kläranlage, durch die erfindungsgemäße Vorrichtung geleitet, die als Feststoff das oben beschriebene anorganische Material enthält. In der erfindungsgemäßen Vorrichtung wird das anorganische Material vorzugsweise zumindest teilweise in Wasser gelöst. Bevorzugt werden als Teilvolumenstrom des Abwassers, vorzugsweise mit Belebtschlamm, 1 bis 100 %, insbesondere 1 bis 20 %, des Zulaufvolumenstroms der Abwasserreinigungsanlage, an einer geeigneten Stelle dem Klärprozess entnommen und durch die erfindungsgemäße Vorrichtung geleitet. Der in die erfindungsgemäße Vorrichtung eingeleitete Teilvolumenstrom des Abwassers oder Belebtschlamms wird mit dem Feststoff durch die Vorrichtung nach Anspruch 1 gleichmäßig und konstant in einen intensiven Kontakt gebracht. Das Abwasser, vorzugsweise mit Belebtschlamm, kann im freien Ablauf aus der Vorrichtung heraus und in das System der Abwasserreinigungsanlage oder Kläranlage, beispielsweise in ein Belebtschlammbecken, zurück geführt werden. Im Kontakt mit dem Abwasser, das vorzugsweise Belebtschlamm enthält, kann es zu einer ausreichenden Umwandlung der Inhaltsstoffe des anorganischen Materials zu Ca(OH)₂, Mg(OH)₂, Ca(HCO₃)₂, Mg(HCO₃)₂ sowie verwandten Verbindungen kommen. Die Stoffe werden im Laufe der Betriebszeit vollständig gelöst und können sich an den Wänden der Anlage abscheiden aber auch an die Belebtschlammflocke anlagern. Dadurch kann vorteilhaft auch die Flockenstruktur von Belebtschlamm stabilisiert werden, wobei der Gehalt an CaCO₃ der Flocke steigt. Auf diese Weise kann neben dem Schutz der Betonwände auch der Schlamm behandelt und in seiner Struktur stabilisiert werden. Dadurch kann besonders vorteilhaft auch eine Bildung von Schwimmschlamm und Blähschlamm vermieden oder verhindert werden. Darüber hinaus können sich weitere Vorteile einstellen, wie ein verbessertes Absetzverhalten im Nachklärbecken, eine Stabilisierung der Nitrifikation, ein Ausgasen von Kohlensäure im Faulturm ohne Schaumbildung oder Spucken.

Der Feststoff kann in einer Korngröße < 20 mm, bevorzugt 2 bis 12 mm, vorliegen.

Die Schütthöhe des Feststoffs in dem Behälter kann in Abhängigkeit von den Dimensionen der erfindungsgemäßen Vorrichtung 20 bis 400 cm, bevorzugt 60 bis 250 cm, betragen. Ein gesicherter Betrieb ist insbesondere bei einer Beschickung der erfindunsgemäßen Vorrichtung mit 1 bis 30 m³, bevorzugt 5 bis 15 m³, Abwasser, vorzugsweise mit Belebtschlamm, pro Stunde und m² Querschnittsfläche der Vorrichtung möglich.

Anstelle einer einzigen erfindungsgemäßen Vorrichtung kann auch eine Serie von Vorrichtungen bzw. eine Vorrichtungskaskade eingesetzt werden.

Die erfindungsgemäße Vorrichtung wird daher vorteilhaft in einer Abwasserreinigungs- oder Kläranlage verwendet.

Durch ihre Verwendung in einer Abwasserreinigungs- oder Kläranlage kann insbesondere eine vorteilhafte Erhöhung des pH-Werts des Abwassers, eine vorteilhafte Verringerung des Calcitlösevermögens des Abwassers, eine Erhöhung der Versorgung einer nach dem aeroben Belebtschlammverfahren betriebenen biologischen Abwasserreinigungsanlage mit Calcium und Magnesium sowie eine Erhöhung des Gehalts an CaCO₃ der Belebtschlammflocke einer nach dem aeroben Belebtschlammverfahren betriebenen biologischen Abwasserreinigungsanlage erreicht werden.

Das Calcitlösevermögen oder die Calcit-Sättigung, was im Folgenden als CLV abgekürzt wird, betrifft das Kalk-Kohlensäure-Gleichgewicht. Die Berechnung des CLV erfolgt durch die Berechnung des Sättigungs-pH-Wertes nach Strohecker und Langelier gemäß der DIN 38404 Teil 10 R 2. Ein negatives Calcitlösevermögen bedeutet, dass nach dem Kalk-Kohlensäure-Gleichgewicht Calciumcarbonat abgeschieden wird. Bei einer nach dem Belebtschlammverfahren betriebenen biologischen Abwasserreinigungsanlage bedeutet ein verringertes CLV, dass die erfindungsgemäße Vorrichtung für die Abwasserreinigungsanlage vorteilhaft ausreichend Calcium und gegebenenfalls Magnesium bereitstellt.

### Im Folgenden wird die Erfindung anhand von Zeichnungen näher erläutert. Es zeigt

- Figur 1: einen Längsschnitt durch eine schematisch dargestellte erfindungsgemäße Vorrichtung;
- Figur 2: eine Draufsicht auf die Vorrichtung der Figur 1;
- Figur 3: eine Draufsicht auf die Vorrichtung der Figur 1 in Höhe der Linie 2;
- Figur 4: eine schematische Perspektivansicht auf den Bereich 122 des Rührblatts 22 in Figur 3; und
- Figur 5: eine schematische Perspektivansicht auf den Bereich 120 des Rührblatts 20 in Figur 3.

In den verschiedenen Figuren sind entsprechende Bauteile, Elemente und Gegenstände mit gleichen Bezugszeichen versehen.

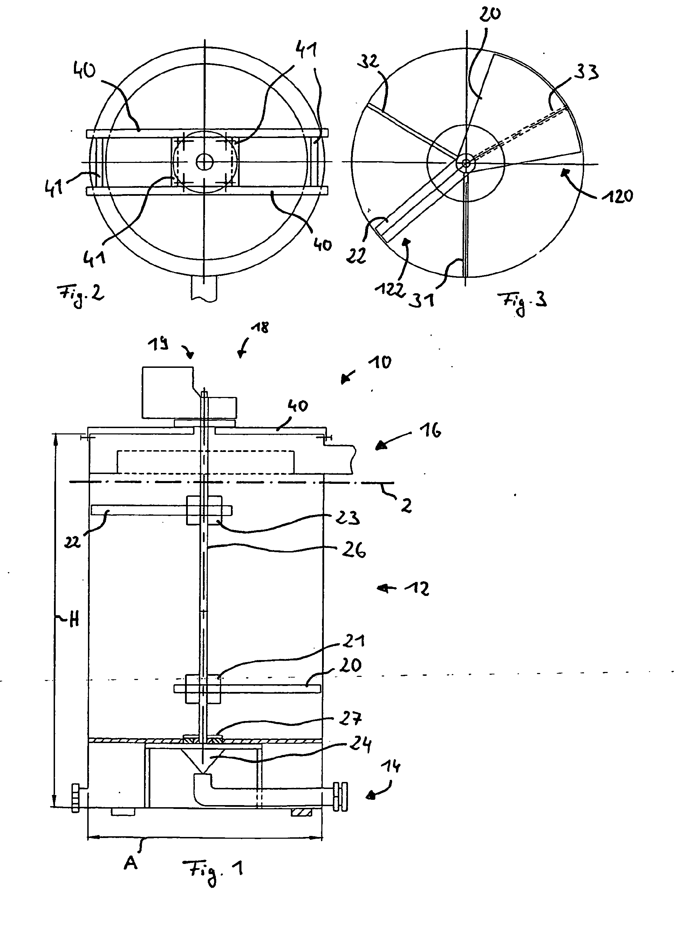

Die Figur 1 zeigt einen Längsschnitt durch eine schematisch dargestellte erfindungsgemäße Vorrichtung 10 zum Lösen und/oder Suspendieren eines Feststoffs in durch die Vorrichtung leitbarem Abwasser. Sie umfasst den Behälter 12 zur Aufnahme des Feststoffs, den Zulauf 14 durch den das Abwasser in den Behälter und zu dem Feststoff einleitbar ist, den Ablauf 16 durch den der in dem Abwasser gelöste und/oder suspendierte Feststoff aus dem Behälter ableitbar ist, und die Rühreinrichtung 18 zum Mischen von in dem Behälter aufgenommenem Feststoff und durch den Zulauf in den Behälter eingeleitetem Abwasser. Der Körper des Behälters 12 ist (kreis)zylinderförmig ausgebildet. Die Höhe des Behälters ist in der Figur 1 durch den Pfeil H angegeben. Der Behälter 12 ist so angeordnet, dass er auf seiner Grundfläche steht. Der Durchmesser des Behälters 12 ist durch den Pfeil A angegeben. Der Zulauf 14 ist so ausgebildet, dass das Abwasser in die Mitte des Behälters einleitbar ist. Über dem Zulauf 14 ist der Verteilerkegel 24 angeordnet zur Verteilung des über den Zulauf 14 in den Behälter zugeführten Abwassers in dem Behälter. Die Rühreinrichtung 18 umfasst den Getriebemotor 19, der vorzugsweise für 1 bis 5, vorzugsweise etwa 2,5, Umdrehungen pro Minute ausgelegt ist, die Welle 26 mit einem Durchmesser von 40 mm, die zwei Rührblätter 20 und 22 mit den Gegenlagern 21 und 23 sowie das Lager 27. Das Lager 27 ist auf den drei Querstreben 30, 31 und 32 befestigt, die in Fig. 3 gezeigt sind. An der äußeren Mantelfläche des zylinderförmigen Behälters können Trittstufen (nicht gezeigt) vorgesehen sein. Damit kann die Zugänglichkeit des Behälters verbessert werden. Mit der erfindungsgemäßen Vorrichtung kann bei einer bevorzugten Ausführungsform der Erfindung der Feststoff, der vorzugsweise das oben beschriebene anorganische Material umfasst, dispergiert, bevorzugt zumindest teilweise, besonders bevorzugt vollständig, gelöst werden. Dies wird in der Regel begünstigt durch Kohlensäure in dem Abwasser. Besonders bevorzugt können dann die gelösten Bestandteile des anorganischen Materials zumindest teilweise auf der Belebtschlammflocke einer nach dem aeroben Belebtschlammverfahren betriebenen biologischen Abwasserreinigungsanlage fixiert werden.

Die Figur 2 zeigt eine Draufsicht auf die Vorrichtung der Figur 1. Der Getriebemotor 19 und die Rühreinrichtung sind mit den Streben 40 und 41 an der Vorrichtung 10 befestigt.

Die Figur 3 zeigt eine Draufsicht auf die Vorrichtung der Figur 1 in Höhe der in der Figur 1 gezeigten teils gestrichelt, teils punktierten Linie 2.

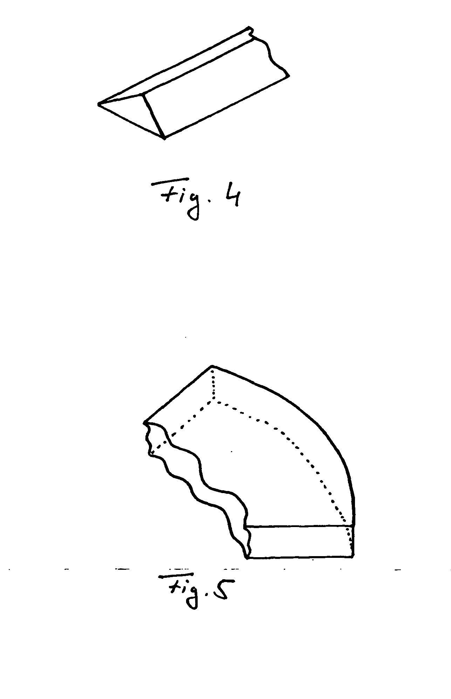

Die Figur 4 zeigt den in Figur 3 mit dem Pfeil 122 gekennzeichneten Bereich des Rührblatts 22 in einer schematischen Perspektivansicht. Das Rührblatt 22 weist einen dreiecksförmigen Querschnitt auf.

Die Figur 5 zeigt den in Figur 3 mit dem Pfeil 120 gekennzeichneten Bereich des Rührblatts 20 in einer schematischen Perspektivansicht. Das Rührblatt 20 ist als Kreisscheibensektor ausgeformt. Besonders bevorzugt weisen beide Rührblätter 20 und 22 eine Form auf, wie sie in der Figur 5 dargestellt ist.

## Patentansprüche

1. Vorrichtung (10) zum Lösen und/oder Suspendieren eines Feststoffs in durch die Vorrichtung leitbarem Abwasser, umfassend:
(a) einen Behälter (12) zur Aufnahme des Feststoffs, wobei die Schütthöhe des Feststoffs in dem Behälter 20 bis 400 cm beträgt, wobei die Vorrichtung so angeordnet ist, dass das Abwasser entgegen der Schwerkraft durch den Behälter pumpbar ist, und der Behälter nach oben hin offen ist und einen zylinderförmigen Körper aufweist,
(b) einen Zulauf (14), durch den das Abwasser von unten in die Mitte des Behälters und zu dem Feststoff einleitbar ist,
(c) einen Ablauf (16), durch den der in dem Abwasser gelöste und/oder suspendierte Feststoff aus dem Behälter ableitbar ist,
(d) eine Rühreinrichtung (18) zum Mischen von in dem Behälter aufgenommenem Feststoff und durch den Zulauf in den Behälter eingeleitetem Abwasser,
(e) eine Pumpe zum Pumpen des Abwassers durch den Zulauf in den Behälter und des in dem Abwasser gelösten und/oder suspendierten Feststoffs durch den Ablauf aus dem Behälter und
(f) einen Verteilerkegel (24), der über dem Zulauf (14) angeordnet ist, zur Verteilung des über den Zulauf in den Behälter zugeführten Abwassers in dem Behälter.

2. Vorrichtung nach Anspruch 1, wobei der Zulauf eine Rückschlagklappe aufweist.

3. Vorrichtung nach einem vorstehenden Anspruch, wobei die Rühreinrichtung mindestens ein Rührblatt (20), vorzugsweise zwei Rührblätter (20; 22), aufweist.

4. Vorrichtung nach einem vorstehenden Anspruch, wobei die Wandstärke des Behälters bis zu 6 mm, vorzugsweise etwa 3 mm, beträgt.

5. Vorrichtung nach einem vorstehenden Anspruch, wobei der Behälter eine Höhe von bis zu 4 m, vorzugsweise etwa 2,0 bis 2,5 m, besonders bevorzugt etwa 2,2 m, und einen Durchmesser von bis zu 3 m, vorzugsweise 1,0 bis 1,5 m, besonders bevorzugt etwa 1,2 m, aufweist.

6. Vorrichtung nach einem vorstehenden Anspruch, die aus nicht rostendem Stahl gefertigt ist.

7. Vorrichtung nach einem vorstehenden Anspruch, wobei die Rühreinrichtung eine Welle (26) mit einem Durchmesser von bis zu 80 mm, vorzugsweise etwa 40 mm, aufweist.

8. Vorrichtung nach einem vorstehenden Anspruch, wobei der Feststoff für ein anorganisches Material steht, das ein Carbonat, Hydrogencarbonat, Oxid oder Hydroxid oder eine Mischung davon von Calcium und Magnesium enthält.

9. Vorrichtung nach Anspruch 8, wobei das anorganische Material Dolomit, vorzugsweise MgO, MgCO₃, CaO und CaCO₃, besonders bevorzugt thermisch behandelten Dolomit, enthält.

10. Verwendung einer Vorrichtung nach einem der Ansprüche 1 bis 9 in einer Abwasserreinigungs- oder Kläranlage.

11. Verwendung nach Anspruch 10 zur Erhöhung des pH-Werts des Abwassers.

12. Verwendung nach Anspruch 10 oder 11 zur Verringerung des Calcitlösevermögens des Abwassers.

13. Verwendung nach einem der Ansprüche 10 bis 12 zur Erhöhung der Versorgung einer nach dem aeroben Belebtschlammverfahren betriebenen biologischen Abwasserreinigungsanlage mit Calcium und Magnesium.

14. Verwendung nach einem der Ansprüche 10 bis 12 zur Erhöhung des Gehalts an CaCO₃ der Belebtschlammflocke einer nach dem aeroben Belebtschlammverfahren betriebenen biologischen Abwasserreinigungsanlage.

15. Verwendung nach einem der Ansprüche 10 bis 12 zur Verringerung oder Vermeidung von Verschleiß von Beton durch einen lösenden Angriff.

## Claims

1. A device (10) for dissolving and/or suspending a solid in waste water that can be conducted through the device, comprising:
(a) a container (12) for holding the solid, wherein the filling height of the solid in the container 20 is up to 400 cm, wherein the device is arranged in such a manner that the waste water can be pumped against gravity through the container and the container is upwardly open and exhibits a cylindrical body,
(b) an intake (14) through which the waste water can be introduced from below into the centre of the container and to the solid,
(c) an outlet (16) through which the solid dissolved and/or suspended in the waste water can be discharged from the container,
(d) an agitator mechanism (18) for mixing solid held in the container and waste water introduced through the intake into the container,
(e) a pump for pumping the waste water through the intake into the container and the solid dissolved and/or suspended in the waste water through the outlet from the container and
(f) a distributor cone (24) which is arranged above the intake (14) for distributing in the container the waste water fed into the container via the intake.

2. The device according to claim 1, wherein the intake exhibits a non-return valve.

3. The device according to a preceding claim, wherein the agitator mechanism has at least one blade (20), preferably two blades (20, 22).

4. The device according to a preceding claim, wherein the wall thickness of the container is up to 6 mm, preferably roughly 3 mm.

5. The device according to a preceding claim, wherein the container has a height of up to 4 m, preferably roughly 2.0 to 2.5 m, particularly preferably roughly 2.2 m, and a diameter of up to 3 m, preferably 1.0 to 1.5 m, particularly preferably roughly 1.2 m.

6. The device according to a preceding claim which is produced from stainless steel.

7. The device according to a preceding claim, wherein the agitator mechanism has a shaft (26) with a diameter of up to 80 mm, preferably roughly 40 mm.

8. The device according to a preceding claim, wherein the solid refers to an inorganic material containing a carbonate, hydrogen carbonate, oxide or hydroxide or a mixture of calcium and magnesium.

9. The device according to claim 8, wherein the inorganic material contains dolomite, preferably MgO, MgCO₃, CaO and CaCO₃, particularly preferably heat-treated dolomite.

10. Use of a device according to one of the claims 1 to 9 in a waste water purification or sewage treatment plant.

11. Use according to claim 10 to increase the pH-value of the waste water.

12. Use according to claim 10 or 11 to reduce the calcite dissolution capacity of the waste water.

13. Use according to one of the claims 10 to 12 to increase the supply of calcium and magnesium to a biological sewage treatment plant operated based on the aerobic activated sludge method.

14. Use according to one of the claims 10 to 12 to increase the CaCO₃ content of the activated sludge floc of a biological sewage treatment plant operated based on the aerobic activated sludge method.

15. Use according to one of the claims 10 to 12 to reduce or avoid wear to concrete due to a solvent attack.

## Revendications

1. Dispositif (10) destiné à dissoudre ou à mettre en suspension un solide dans des eaux usées, susceptibles d'être conduites à travers le dispositif, comprenant :
(a) un réservoir (12) destiné à recevoir le solide, la hauteur de chargement du solide dans le réservoir étant de 20 à 400 cm, le dispositif étant placé de telle sorte que les eaux usées puissent être pompées à l'encontre de la force de gravité à travers le réservoir et que le réservoir soit ouvert sur le dessus et comporte un corps de forme cylindrique,
(b) une arrivée (14), à travers laquelle les eaux usées peuvent être introduites dans le centre du réservoir et vers le solide,
(c) un écoulement (16) à travers lequel le solide dissous et/ou mis en suspension dans les eaux usées peut être évacué hors du réservoir,
(d) un système de brassage (18) destiné à mélanger du solide réceptionné dans la réservoir et des eaux usées introduites dans le réservoir à travers l'arrivée,
(e) une pompe destinée à pomper les eaux usées à travers l'arrivée dans le réservoir et le solide dissous et/ou mis en suspension dans les eaux usées à travers l'écoulement hors du réservoir et
(f) un cône distributeur (24) qui est placé au-dessus de l'arrivée (14), destiné à distribuer dans le réservoir les eaux usées amenées dans le réservoir.

2. Dispositif selon la revendication 1, l'arrivée comportant un clapet anti-retour.

3. Dispositif selon l'une quelconque des revendications précédentes, le système de brassage comportant au moins une pale agitatrice (20), de préférence deux pales agitatrices (20 ; 22).

4. Dispositif selon l'une quelconque des revendications précédentes, l'épaisseur de paroi du réservoir étant de jusqu'à 6 mm, de préférence d'environ 3 mm.

5. Dispositif selon l'une quelconque des revendications précédentes, le réservoir présentant une hauteur de jusqu'à 4 m, de préférence d'environ 2,0 à 2,5 m, de manière particulièrement préférée d'environ 2,2 m et un diamètre de jusqu'à 3 m, de préférence de 1,0 à 1,5 m, de manière particulièrement préférée d'environ 1,2 m.

6. Dispositif selon l'une quelconque des revendications précédentes, qui est fabriqué en acier inoxydable.

7. Dispositif selon l'une quelconque des revendications précédentes, le système de brassage comprenant un arbre (26) d'un diamètre de jusqu'à 80 mm, de préférence d'environ 40 mm.

8. Dispositif selon l'une quelconque des revendications précédentes, le solide étant une matière anorganique qui contient un carbonate, un hydrogénocarbonate, un oxyde ou un hydroxyde ou un mélange de ces derniers de calcium et magnésium.

9. Dispositif selon la revendication 8, la matière anorganique étant une dolomite, de préférence du MgO, du MgCO₃, du CaO et du CaCO₃, de manière particulièrement préférée une dolomite ayant subi un traitement thermique.

10. Utilisation d'un dispositif selon l'une quelconque des revendications 1 à 9 dans une installation de traitement des eaux usées ou dans une station d'épuration.

11. Utilisation selon la revendication 10 pour augmenter la valeur pH des eaux usées.

12. Utilisation selon la revendication 10 ou la revendication 11, pour réduire la capacité de dissolution du calcite des eaux usées.

13. Utilisation selon l'une quelconque des revendications 10 à 12, pour augmenter l'alimentation en calcium et magnésium d'une installation biologique d'épuration des eaux usées exploitée selon le procédé aux boues activées aérobies.

14. Utilisation selon l'une quelconque des revendications 10 à 12 pour augmenter la teneur en CaCO₃ des flocons de boues activées d'une installation biologique d'épuration des eaux usées exploitée selon le procédé aux boues activées aérobies.

15. Procédé selon l'une quelconque des revendications 10 à 12 pour réduire ou pour éviter l'usure de béton par attaque solvante.
